# EUROPEAN PATENT APPLICATION

(11) **EP 3 929 894 A1**
(43) Date of publication of application: **29.12.2021**
(21) Application number: 20020297.6
(22) Date of filing: 24.06.2020
(51) Int. Cl.: G09B 9/00, G09B 19/00, G09B 19/24

(54) **TRAINING STATION AND METHOD OF INSTRUCTION AND TRAINING FOR TASKS REQUIRING MANUAL OPERATIONS**

(71) Applicant: Universitatea Lician Blaga Sibiu, 550024 jud. Sibiu (RO)
(72) Inventor: Pîrvu, Bogdan-Constantin, 550052 jud. Sibiu (RO); Petruse, Radu Emanuil, 550292 Jud. Sibiu (RO); Neghina, Mihai, 550024 jud. Sibiu (RO)

(57) **Abstract**

The invention refers to a user training station for tasks requiring manual operations with real-time adaptive instructions, and to a user training method.

The training station provides both the training of uninitiated users, and the improvement of performance of experienced users. The station is fitted with at least one output devices and several input devices and equipment with adjustable/self-adjustable position depending on the requirements, and which acquire both data on the objective evolution of the training, the user's movements/actions, and information on the user's physical, emotional and/or mental state. The physical training environment is adjustable at the beginning of the training depending on the training needs and on the user's estimated or predetermined level of experience. During the instruction or training process, depending on the user's actions, information is stored in a storage module and is then processed by a processing module, estimating, besides the progress and compliance of tasks and operations performed by the user, his/her physical, emotional and/or mental state, the training station having the capacity to automatically and in real-time adjust the instructions/messages sent to the user concerning the task/tasks in progress and/or the tasks that are to be executed during the training.

## Description

The invention refers to a training station with real-time adaptive instructions and to a method of user instruction and training for tasks requiring manual operations.

There are several areas where a high level of dexterity / skill / handiness is required, from medicine, for example: surgery, dentistry, etc., to industrial processes, such as welding, assembly, etc.

However, in order to rapidly and efficiently achieve a level of knowledge and dexterity that is sufficient for the suggested task, a specific training is required, in conjunction with a careful monitoring of the user, and with the real-time adjustment of training instructions, both in terms of the level of experience, and of the user's current physical, emotional and/or mental state.

There are various training systems in specialized literature, in particular simulators / virtual reality systems and systems for learning new theoretical knowledge, but also for performing certain specific tasks.

Patent US10311742B2 presents an interactive training system, with real or virtual, simulated environment, where the efficient training provides the possibility of adapting the instructions to the user's answers and actions, and where the system uses only the information which the user explicitly provides to the system by interaction, but which does not cover the possibility of detecting or estimating the user's inner state via biometric sensors and combining such information with information on the progress of the training in order to improve efficiency.

Another document, US20120062725A1, is based on hardware solutions for identifying the accuracy and correctness of operations necessary for fulfilling certain tasks, but does not interact with the user in order to guide him/her or to accelerate the training through personalized instructions.

Patent US8041444B2 describes a generic workstation that can be operated by a worker without any prior qualification or specialization, but that does not aim to teach (train) the user, nor to monitor the user in order to generate instructions tailored to user's physical, emotional and/or mental state.

Patent US20160293036A1 presents a system for assessing the level of expertise and adjustment of the user's training for new knowledge and mental abilities, for instance the learning of a new language, but that cannot be extended to cover manual operations, with the learning cycle consisting of the training-assessment-level adjustment steps, with the possibility of adjusting the instructions and exercises only after the assessment test.

Another known patent is US8512043B2, which presents a system and method for training a user for manual operations and interactions with real objects, such as a training station for welding, where the accuracy of the user's actions is objectively monitored with non-invasive sensors, which generate interactions tailored to the progress of the task and to the level of expertise displayed by the user, a system that does not include biosensors for determining and monitoring the user's physical, emotional and/or mental states, nor the adjustment of the instructions to these states.

WO2006034571 refers to simulators for teaching, training, qualification and certification purposes, and more particularly to a body motion training and qualification system and method which allows the training and qualification of a user performing a skill-related training exercise involving body motion in a workspace, where the training environment is selected, and variables, parameters and controls of the training environment and the training exercise are adjusted, the use of an input device by the user is monitored, the 3D angles and spatial coordinates of reference points related to the input device are monitored through a detection device, and the simulated 3D dynamic environment reflecting effects caused by actions performed by the user on objects is computed in real time, and images of the simulated 3D dynamic environment in real time are generated on a display device, recording the data indicative of the actions performed by the user and the effects of the actions, setting the user's qualification as a function of the recorded data. The system does not include biosensors for determining and monitoring the user's physical, emotional and/or mental states, nor the adjustment of the instructions to these states.

The technical problem solved by this invention consists in the observation, training and instruction of users in a work environment that is adjustable to various scenarios, by collecting information regarding the progress and compliance of tasks and operations performed by the user, on the one hand, as well as the physical, emotional and mental state of the user, on the other hand, and by processing this information in order to streamline the training process.

This objective is achieved by creating a training station and a method of user instruction and training, in particular for tasks requiring manual operations.

The training station, according to the invention, solves the technical problem in that it consists of an automated and real-time adjustable work environment, containing real physical components and/or virtual components, for example: *Virtual Reality* simulation or a combination of the two, for example: physical system with instructions via *Augmented Reality,* where the training task must be performed.

*The training station, according to the invention, consists of a training enclosure, a warehouse, input devices, output devices and a data processing and storage module; the warehouse is used for storing individual input and output devices, multiple individual processing, design, assembly and diagnosis equipment or that incorporate input and output devices, necessary for the performance and monitoring of the instruction and training progress; inside the training enclosure are installed some of the input and output devices, as well as multiple processing, design, assembly and diagnosis equipment that can adjust their relative position within the platform; other input and output devices may be installed on the user; the data processing and storage module is designed to record all accessible signals, to run applications for the real-time processing of data from all input devices and to send real-time data to all output modules, equipment or devices, while the output devices ensure the transmission to the user of adequate information, messages and instructions.*

The method of instruction and training for tasks requiring manual operations used in the implementation of a training process consists of the following steps:
- pre-configuration of the mobile platforms via the handling and/or transport systems with *individual input and output devices, multiple individual processing, design, assembly and diagnosis equipment or that incorporate input and output devices,* necessary for a training process, such as: sensors, sound and image playback systems, tools specific to the performed operations, as well as by specific elements, for example: equipment necessary for the operations, such as collaborative robotic arm, Augmented Reality equipment, 3D printers, etc.;
- movement of the mobile platform after setup, in the working position within the training station;
- start of the training process;
- permanent and continuous capture of user data by the input equipment, via sensors and biosensors installed on the training station and/or on the user;
- analysis of this data, according to the training scenario and the automated and real-time adjustment of the physical work environment and of the instructions given by the output devices, according to the user's needs, achieved via the data processing and storage module.

The advantages of the invention are:
- The provision of an adaptable and flexible workspace, corresponding work conditions and equipment that reproduce reality in an objective manner;
- The generation of work instructions and interactions through personalized indications;
- The analysis of the user's qualification, dexterity and skills;
- Determining and monitoring the user's physical, emotional and/or mental states, as well as the execution performance by the user of tasks and operations;
- Training adjustment based on the user's physical, emotional and/or mental states, as well as taking into account the compliance and progress of the current task and the execution performance of previous tasks. The adjustment may consist, for example, in the acceleration or deceleration of the training, the simplification or the increasing of the training's difficulty level, the elaboration or simplification of an instruction, etc.;
- The automatic adjustment to the user's profile and experience, according to the information collected from previous pre-examinations and training sessions;
- The use of the station, both by experienced users, for qualificator certification and continuous improvement for the further development of periodic testing or compliance with quality standards, and by uninitiated users, in order to familiarize themselves and then to work independently in an operational framework, for instance on the assembly line of a factory.

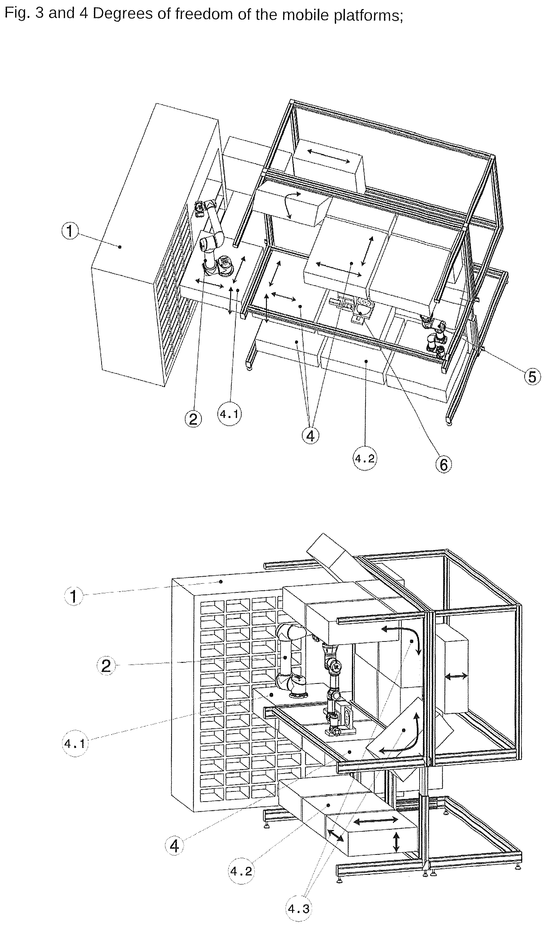

Next, is an example of implementation of the invention in relation to figures 1-11 representing:
Fig. 1 and 2 Views of the training station;
Fig. 3 and 4 Degrees of freedom of the mobile platforms;
Fig. 5 Isometric front view of the enclosure and the degrees of freedom for moving the mobile platforms;
Fig. 6 Isometric side view of the enclosure and the degrees of freedom for moving the mobile platforms;
Fig. 7 Logic of the training system;
Fig. 8 Decrease in the complexity of the training scenario;
Fig. 9 Automatic adjustment of the training station's sensors - Sequence 1;
Fig. 10 Automatic adjustment of the training station's sensors - Sequence 2;
Fig. 11 Automatic adjustment of the training station's sensors - Sequence 3;

The training station, according to the invention, is flexible in terms of the possibilities of setting up the training environment and of laying out the components.

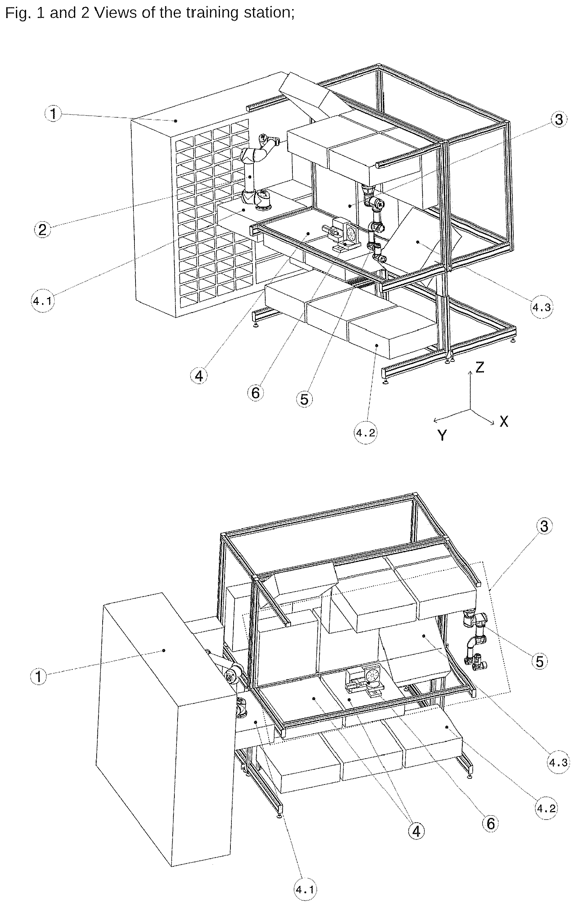

According to Fig. 1, the physical work environment is made up of a training enclosure **3**, of parallelepipedal or other shape, adapted to the purpose and/or training needs. Enclosure **3** is made of mechanical structures fitted with mobile platforms **4**, with gliding or rotation possibility, which can self-position within the enclosure. Outside the enclosure **3**, there is a warehouse **1**, which can be automated or automatable.

The warehouse **1** includes mechanical elements or sensors when can glide or rotate, and is used for storing individual input and output devices, multiple individual processing, design, assembly and diagnosis equipment or that incorporate input and output devices, devices and equipment installed via one or several handling and/or transport systems between the warehouse and the mobile platforms, installed according to a training scenario.

The input devices include human-machine interaction devices, for example keyboards, touch displays for the interactive recording of user's responses or requests, sensors and biosensors, for instance GSR, EEG, EMG, EKG, glasses for analysing the user's gaze and other relevant sensors for estimating the physiological parameters. These devices allow the collection of all physical measurements concerning the user, such as physical and mental states, emotions, behaviours, actions, posture, and concerning objects, instruments, tools, such as the degree of wear, the position.

The training station is fitted with at least one output device. The output device may be selected from: haptic devices, such as feedback gloves; actuators, such as pneumatic cylinder; optical display devices, such as screen, holograms, reflector, projector; audio devices, such as speakers, headphones; direct human-computer interfaces, such as brain-computer interface; electrical devices, such as electrodes, devices that generate olfactory or gustatory stimuli.

The input and output devices are functional on mobile platforms and can adjust their relative position on the platform's carriage depending on the user's position/posture/state.

The input/output devices and the equipment can be installed by means of a handling and transport system, for instance a collaborative robot arm **2**, fitted on a mobile platform **4.1.**, platform intended strictly for loading-unloading of multiple equipment from the warehouse **1** onto the mobile platforms **4** which make up the training scenario.

The collaborative robot arm **2** avoids or minimises the damages and risks of accident in case of possible collisions with the user or with the dynamic environment in which they operate. The mobile platform **4.1**. on which the robotic arm **2** is installed provides the arm with three additional degrees of freedom, in addition to the pre-set degrees of freedom, facilitating access to the entire warehouse as well as to the mobile platforms **4**, thus enabling the modification of all equipment and input and output devices which make up the training system.

The equipment necessary for the training process can be: input devices, such as sensors, output devices, such as speakers, screens, Virtual Reality glasses, or various other equipment, such as tools, devices, possibly not set and not positioned, an assisted assembly system, for example a collaborative robotic arm **5** or a processing equipment **6**. All these devices and equipment are installed by the collaborative robot arm module **2** on the surface of the mobile platforms **4**, platforms that can self-position themselves within the enclosure **3**.

Each mobile platform **4** allows various types of equipment and sensors to be installed, through various systems and mechanisms, such as T channels found on its surface. Also, each platform **4** has a universal plug ensuring the supply of electrical power, compressed air, etc. to the equipment installed, but also their communication within the platform they are installed on, with other systems of the training station.

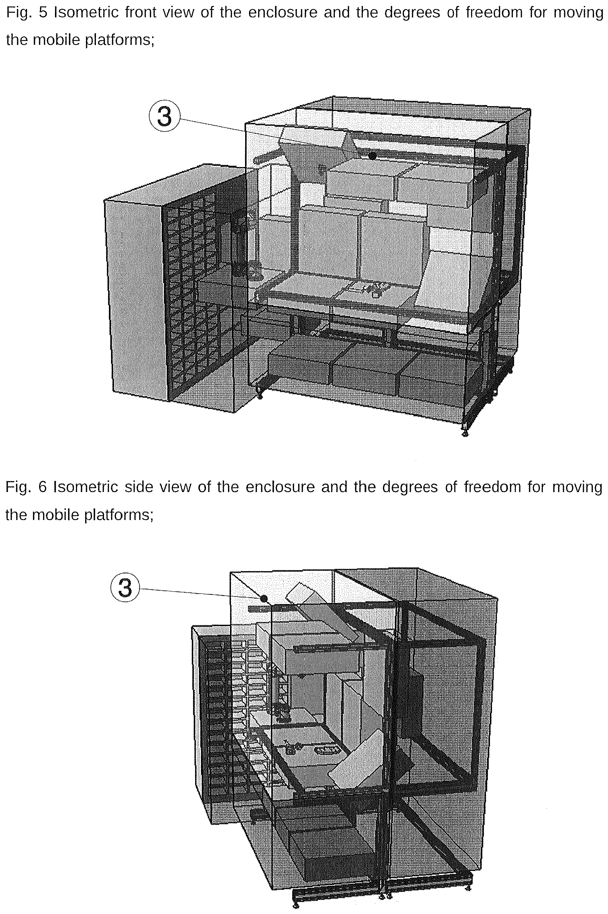

The mobile platforms **4** can move via a guide system that allows up to four degrees of freedom, three translations and one rotation, but not all movements are allowed in the entire workspace of the training station. For example, in the training area coloured in red in Fig. 5 and 6, the mobile platforms **4** can perform translations on all three axes, but cannot perform the rotation on the X axis of the training station **4.2**. Whereas in the training enclosure **3**, coloured in yellow, the mobile platforms can also perform the rotation on the X axis **4.3**. Rotation on the X axis allows the equipment installed on these platforms to tilt, thus enhancing the ergonomics of the training environment and increasing the accuracy of the sensors installed thereon. Warehouse **1** is equipped with an automated management system of the stored components that communicates with an external logistic system, ensuring the supply of components necessary for the training scenarios.

The adjustment of the work environment and work instructions depending on the user is not merely a response to the user's movements/actions or to the progress of task or operations execution, but also depends on the extraction and interpretation of information from involuntary communication, at the level of physiological processes, captured using biosensors, such as the galvanic skin response (GSR), electroencephalogram (EEG), electromyography (EMG), electrocardiogram EKG or glasses for monitoring and analysing the gaze. Involuntary biological reactions are humans' natural response to internal states, and they can be collected and interpreted so as to determine the user's state, including physical condition assessments, such as fatigue, relaxation, focus, flexibility, etc., emotional state assessments, such as grief, joy, etc. or mental state assessments, such as nervousness, creativity, stress, confusion, apathy, sadness, etc.

The adjustment of the work environment and instructions is carried out at a logical level by the processing and storage module. The data storage module is intended to record the current training sequence and the entirety of the signals collected/generated by the input and output devices, and to update the history/statistics for each user and/or target group.

The processing module, for example a computing system, can connect, acquire and process in real-time the data collected from all the input and output devices, can run applications for the objective and subjective identification of task execution compliance by the user, partially or in full, for determining the user's actions, for assessing the user's physical, emotional and/or mental state and can transmit data to all output modules and devices in order to setup and adjust the training based on stored real-time data and statistical data.

The use of this data to personalize messages and instructions, for example: repeating the instructions with more details in case of confusion, reformulating in case of stress, etc. leads, from a pedagogical and psychological point of view, to an improvement in the efficiency of the training process, to a shortening of the necessary training/education period, to a quicker release of training resources and to a faster entry into production for new workers.

This invention's advantages are the adaptive and personalized learning based not only on the user's interaction with the system and on the current and previous performances, but also taking into account the user's physical, emotional and/or mental state, in a training system for tasks involving at least partially mechanical operations, such as the assembly of a final product/subassembly on a production line, the correct assembly/disassembly of various components, like in the case of a garage, quality inspection of the assembly of a final product/subassembly, during surgical procedures for treating fractures, guidance on the first use of a device such as a chainsaw, drilling machine, etc., the correction of certain incorrect habits for assembling a product/subassembly, etc.

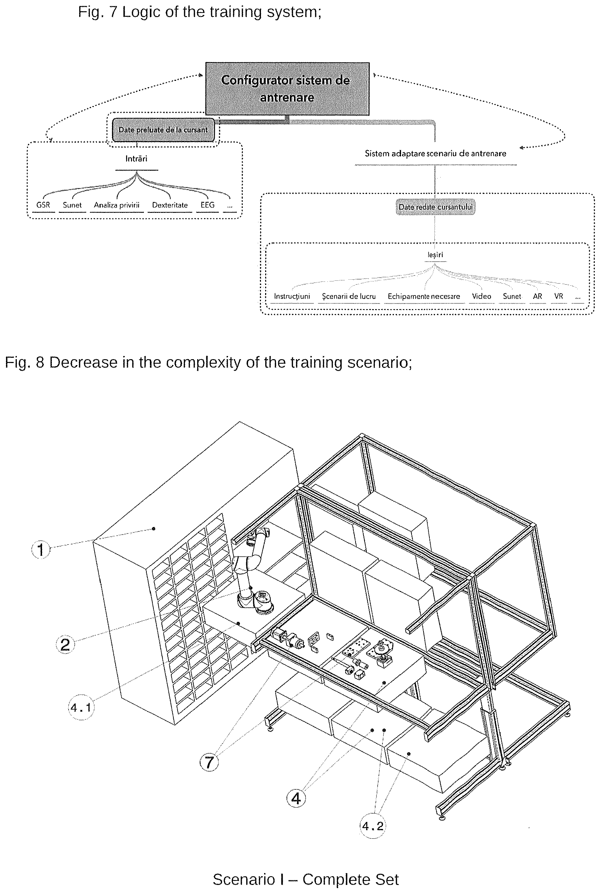

The method of instruction and training for tasks requiring manual operations used in implementing a training process is performed based on the logic presented in figure 7 and consists in the following steps:
a. pre-configuration of the mobile platforms **4** via handling and/or transport systems using, for instance, the collaborative robot arm module **2** with standard elements necessary for a training process, such as sensors, sound and image playback systems, tools specific to the performed operations, as well as by using specific elements, for example equipment necessary for the operations, such as a collaborative robot arm, Augmented Reality equipment, 3D printers, etc.;
b. movement of the mobile platform **4** after setup, in the work position within the training station **3**;
c. start of the training process;
d. permanently capturing user-related and user action-related data via the sensors and biosensors installed on the training station, as part of the processing, design, assembly and diagnosis equipment and/or on the user;
e. the analysis of this data, according to the training scenario, and the automated and real-time adjustment of the physical work environment through the handling and transport system represented by the robotic arm (**2**) as well as the instructions established by the configurator described in summary in Fig. 7 to address the user's needs.

### Example of a training process for assembling a product

This invention allows the training of operators both for a repetitive assembly process and for individual operations, applicable both in case of products in series or one of a kind, and for unforeseen operations, such as maintenance works and equipment commissioning works. This is due to the training station's ability to adapt the work space with which the user interacts, for example the training enclosure (**3**) in Fig. 1, components, subassemblies, tools, equipment, etc., but also to the assembly instructions, including the method of their delivery, for instance only auditory or visual, solely auditory and visually, partially auditory and the rest visual, etc.

In a training scenario for an assembly operation, the components corresponding to the assembly are transferred from the warehouse **1** via the mobile platforms **4** in Fig. 2 by the collaborative robot arm module **2** and are delivered to the workspace by the mobile platforms **4**. It is possible to use multiple mobile platforms which make up the active workspace for different training scenarios, as well as for the delivery of tools, equipment, input devices and output devices for conveying information necessary to the user for the training scenario. Furthermore, if the training requires so, the operator shall wear input devices, non-invasive sensors, for example in the form of a bracelet, glasses, small rubber suction cups, etc.

In case of a training scenario for the assembly process of a product, the operator can start the operation according to the training scenario when the components are delivered to the workspace. Throughout the entire procedure, the operator is monitored with the station's sensors and/or the biosensors worn by the operator and is guided for the correct completion of the process. If the components used for observation, namely the sensors for detecting motion, reactions and emotions, detect nonconforming operations from the operator, the latter is notified via tailored instructions and, if the error cannot be remedied, new components shall be delivered inside the training enclosure **3**. Components may be changed entirely or partially to replace the damaged or inadequately assembled ones. If the operator continues with the nonconforming assembly, the operation is simplified, with less components and adequate instructions, for example with simpler instructions if the operator is stressed, or more detailed if the operator is confused, in order to simplify the assembly training operation (Fig. 8). Sequence I presents a training scenario with a complete assembly, **7**, sequence II presents a training scenario with a simplified assembly, **7'**.

The operation can be simplified up to the point where the operator receives the components one by one, in the natural assembly order.

There is the opposite case where the operator is highly experienced, completes the operation correctly and within a very short period of time. In this case, the training scenario will be more difficult by delivering more components or by reducing the instructions delivered, thus increasing the degree of complexity of the training scenario. Establishing the complexity of the training scenario is performed through the components for observing the operator's behaviour in order to achieve the optimum degree of cognitive load.

The observation components are direct (objective): input devices such as sensors for identifying the accuracy, speed and correctness of the operator's movements during the process.

The training and instruction station also uses indirect observation components which deduce the operator's subjective intentions. These are: input devices, such as galvanic response monitoring sensors for determining the change in the operator's mood, retina and eye motion detection sensors, brainwave monitoring sensors (electroencephalogram) and sound sensors which identify and analyse nonverbal and paraverbal sounds issued by the operator (for example: regular breathing, cough, laughter, sneeze, onomatopoeia, sighs, groans, yawning, crying, etc.).

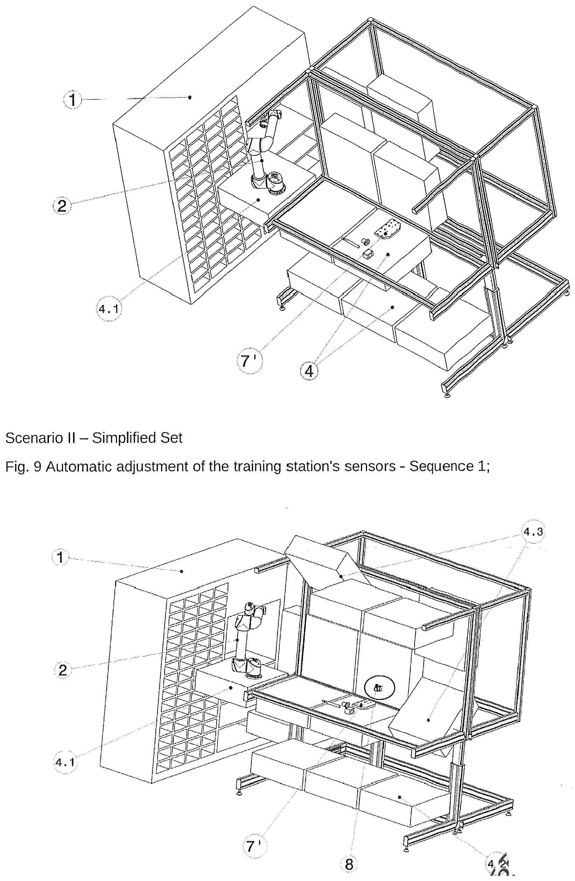

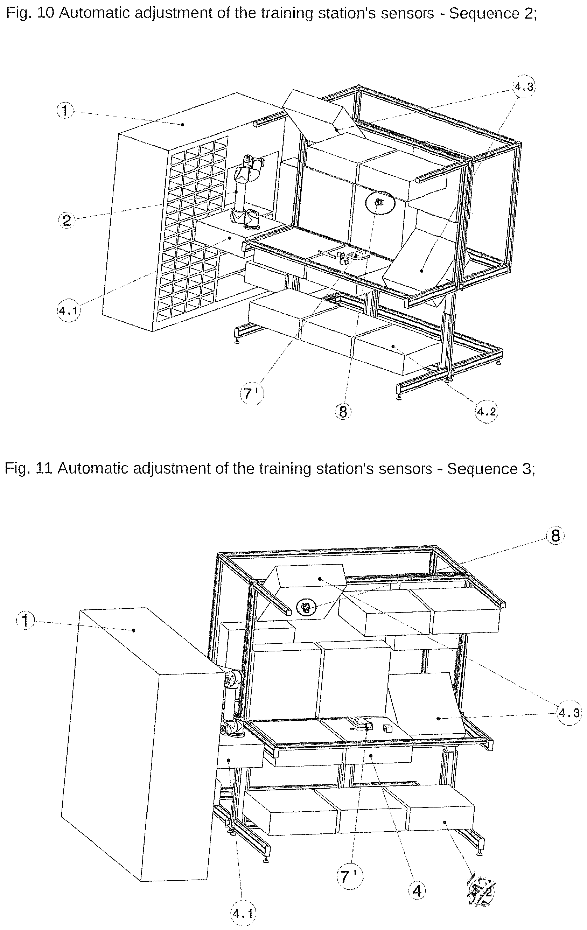

The direct and indirect observation components of the training system are independently controlled, with the possibility of real-time repositioning throughout the training process so as to allow the optimization of data acquisition, with the exception of operator-worn sensors. For example, the motion detection camera can travel on the mobile platform on which it is positioned, sequence II, Fig. 10, or with the entire platform, sequence III, Fig. 11 in order to capture various movements of the operator that are obstructed by other objects, or even by the operator **8** in Fig. 9-11, sequences I, II, III.

The training station is also equipped with a recycling system for components used in the training scenarios. At the end of the training, the components assembled by the operator, either correctly or incorrectly, are automatically disassembled and repositioned in the warehouse 1 by the collaborative robot arm 2, in order to ensure the necessary resources for other training sessions. For complex assemblies that cannot be automatically disassembled, the intervention of a human operator is necessary, who will oversee and intervene upon the disassembly process.

## Claims

1. User training station for tasks requiring manual operations **wherein** the station consists of an automated and real-time adjustable work environment, containing real, physical components, virtual components, for example Virtual Reality simulation or a combination of the two, for example a physical system with instructions via Augmented Reality in which the training task must be performed, a training enclosure (**3**) of parallelepipedal or other shape, adapted to the purpose and/or training scenario, made of mechanical structures fitted with mobile platforms (**4**), with gliding or rotation possibility, which can self-position themselves within the enclosure (**3**), a warehouse (**1**) which can be automated or automatable, used for storing individual input and output devices, multiple individual processing, design, assembly and diagnosis equipment or that incorporate input and output devices, necessary for the instruction and training, equipment installed by means of a handling and/or transport system, for instance a collaborative robot arm (**2**), fitted on a different mobile platform (**4.1**), intended strictly for loading-unloading devices and equipment from the warehouse (**1**) onto the mobile platforms (**4**), according to a training scenario that involves multiple input devices which collect all the data related to human-machine interaction such as, for example, the interaction between a man and an assisted assembly system, like a collaborative robotic arm (**5**) or a processing equipment (**6**), at least one output device sending training information to the user, a processing module that connects, acquires and processes in real-time all the data from the input devices, equipment and sensors, but that can also send real-time data to all output devices, the station being equipped with a storage module for the information acquired during the training sessions, a module that prepares and processes input data, establishes the connection between the input and output devices and the equipment incorporating input and output devices, and has the role of providing user-adapted statistics, and which output signals and instructions to provide during the training.

2. The training station according to claim 1, **wherein** the input devices can be, for example, human-machine interaction devices like keyboards, touch displays for the interactive recording of user's responses or requests, sensors and biosensors for instance GSR, EEG, EMG, EKG, glasses for analysing the user's gaze and other relevant sensors for estimating the physiological parameters, devices and input/output sensors installed on mobile platforms and that can adjust their relative position on the platform's carriage depending on the user's position/posture/state.

3. Training station according to claim 1, **wherein** the output devices may be haptic devices, such as feedback gloves; actuators, such as pneumatic piston; optical display devices, such as screens, holograms, reflector, projector; audio devices, such as speakers, headphones; direct human-computer interfaces, such as brain-computer interface; electrical devices, such as electrodes, devices that generate olfactory or gustatory stimuli.

4. Training station according to claim 1, **wherein** the sensors for collecting user information can change their position on the mobile platforms (**4**) **during the training process** in order to optimise or improve the quality of information collected on the training or to address the user-indicated adjustments.

5. Training station according to claims 1 and 2, **wherein** the mobile platforms (**4**) can move via a guide system that allows up to four degrees of freedom, three translations and one rotation, but not all movements are allowed in the entire workspace of the training station.

6. The method of instruction and training for tasks requiring manual operations used in the implementation of a training process consists of the following steps:
- pre-configuration of the mobile platforms **4** via handling and/or transport systems using, for instance, the robotic arm **2** module with standard elements necessary for a training process, such as sensors, sound and image playback systems, tools specific to the performed operations, as well as by using specific elements, for example equipment necessary for the operations, such as collaborative robot arm, Augmented Reality equipment, 3D printers, etc.;
- moving the mobile platform **4** after setup, in the work position within the training station **3**;
- start of the training process;
- permanently capturing user-related and user action-related data via the sensors and biosensors installed on the training station, as part of the processing design assembly and diagnosis equipment and/or on the user;
- the analysis of this data, according to the training scenario, and the automated and real-time adjustment of the physical work environment through the handling and transport system represented by the robotic arm (**2**) as well as the instructions established by the configurator described in summary in Fig. 7 to address the user's needs.
